# EUROPEAN PATENT APPLICATION

(11) **EP 1 431 167 A2**
(43) Date of publication of application: **23.06.2004**
(21) Application number: 03077148.9
(22) Date of filing: 08.07.2003
(51) Int. Cl.: B62J 7/04

(54) **Extensible storage box for two-wheeled vehicle**

(30) Priority: 20.12.2002 IT MI20022728
(71) Applicant: PIAGGIO & C. S.p.A., 56025 Pontedera (Pisa) (IT)
(72) Inventor: Bagnoli, Alessandro, 56030 Perignano di Lari (Pisa) (IT)
(74) Representative: Zanardo, Giovanni

(57) **Abstract**

An extensible storage box (10, 110) for a two-wheeled vehicle, of the type comprising a lower portion (12, 112) and an upper portion (14, 114), the upper portion (14, 114) which can be closed over the lower portion (12, 112) to provide a loading compartment (16, 116) of a certain volume; the storage box (10, 110) includes a flexible bag (18, 118) connected internally in the loading compartment (16, 116) to at least one of the portions (12, 14, 112, 114) of the storage box (10, 110).

## Description

The present invention relates to an extensible storage box for a two-wheeled vehicle.

In the sector of two-wheeled vehicles, and in particular in the motor scooter sector, compartments designed to store luggage or other accessories are present.

More specifically, there is the tendency to make use of the rear space of the vehicle, that is the space behind the motorcyclist driving the vehicle.

Disposed in these zones are storage boxes, substantially in the form of a parallelepiped or of a particular shape, which are built into the body of the motor scooter, and more precisely above the rear mudguard of the vehicle.

These storage boxes generally comprise two portions, a lower portion and an upper portion which closes over the lower portion. Typically there is a hinge to connect the two portions on one side of the storage box.

The storage boxes are produced with a rigid material. This means that the capacity of these storage boxes is fixed.

In the event of it being necessary to transport a cumbersome item or several items which cannot be contained inside the storage box, these are generally carried by hand in bags by the motorcyclist, thus making driving somewhat awkward.

Alternatively these cumbersome items may nonetheless be placed in the storage box, although this must be left open. In addition to the danger of losing the items with more or less serious consequences for road traffic, there is also the drawback that the items may be subjected to damage as they are exposed to the weather, in particular rain.

The object of the present invention is therefore to solve the drawbacks mentioned above and in particular to produce an extensible storage box for a two-wheeled vehicle which can be adapted to the size of the load to be transported.

Another object of the present invention is to produce an extensible storage box for a two-wheeled vehicle which effectively protects the item being transported from exposure to weather.

Yet another object of the present invention is to produce an extensible storage box for a two-wheeled vehicle which is particularly reliable, simple, functional, with relatively low costs and which is capable of guaranteeing safe transport for the product(s) transported, for the motorcyclist and for road traffic.

These and other objects according to the present invention are attained by producing an extensible storage box for a two-wheeled vehicle as set forth in claim 1.

Further characteristics are provided in the subsequent claims.

The characteristics and advantages of an extensible storage box for a two-wheeled vehicle according to the present invention shall become more apparent from the following description, provided purely as a non-limiting example, with reference to the schematic drawings attached in which:
figure 1 is an axonometric projection of a first embodiment of an extensible storage box for a two-wheeled vehicle according to the present invention, in an extended position;
figure 2 shows a side elevation of the storage box in figure 1, wherein a flexible bag is folded in a lower portion of a loading compartment of the storage box;
figure 3 is a side elevation of the storage box in figure 2, wherein a flexible bag is extended;
figure 4 shows a side elevation of a second embodiment of the storage box, wherein a flexible bag is folded in a top portion of a loading compartment of the storage box;
figure 5 is a side elevation of the storage box in figure 4, wherein a flexible bag is extended.

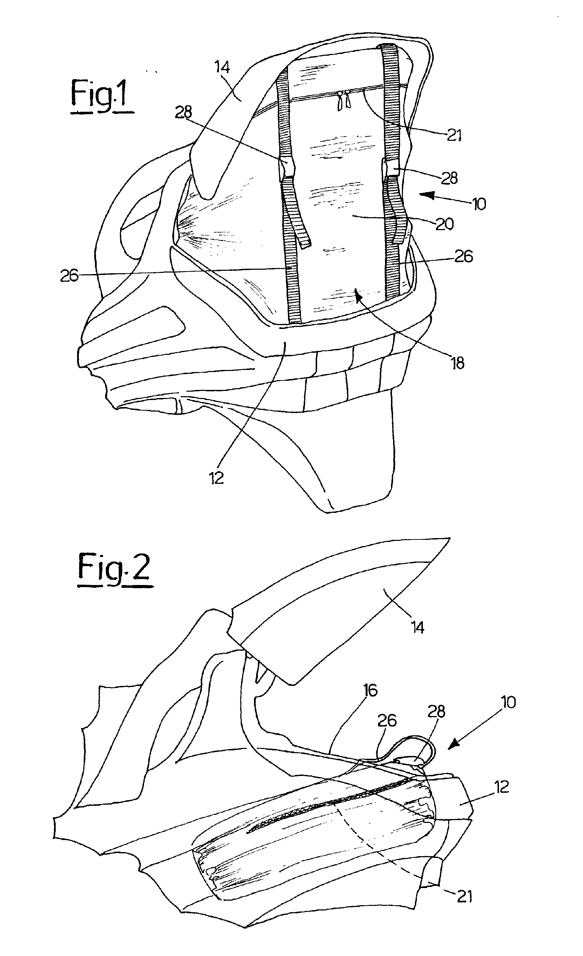

With reference to figures 1, 2 and 3, these show a first embodiment of an extensible storage box, indicated as a whole with 10, for a two-wheeled vehicle.

In the example shown, according to the present invention, the storage box 10 comprises a lower portion 12 and an upper portion 14: the upper portion 14 can close over a lower portion 12 to provide a loading compartment 16 of a certain volume.

The upper portion 14 is in the example hinged to the lower portion on one side. At the bottom of the loading compartment 16, as can be seen in figure 2, a flexible bag 18 is disposed, folded over itself and fixed internally to the lower portion 12.

The bag 18 includes a casing 20 in a flexible and weather-resistant material, for example a waterproof fabric. The casing 20 can be opened with a zip fastener 21 or other closing means.

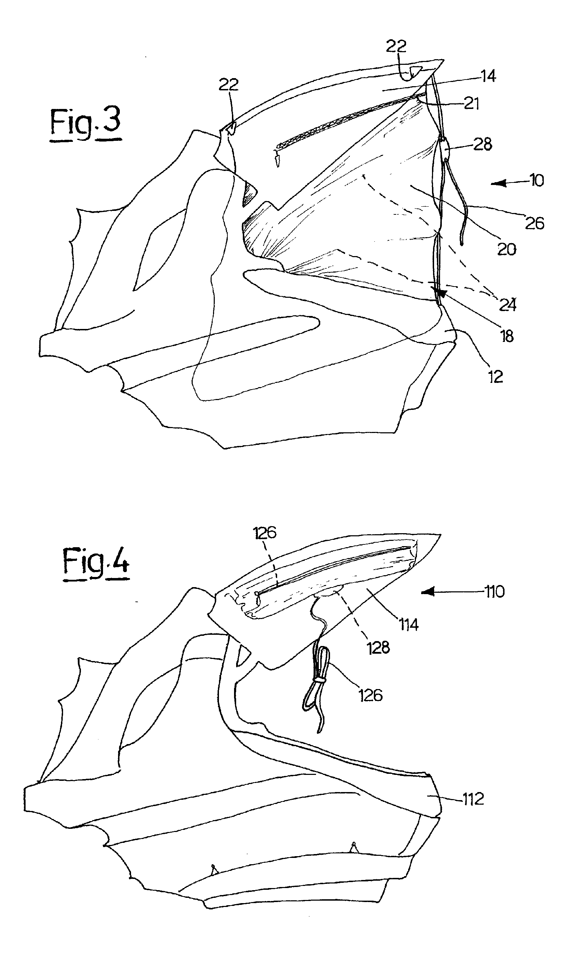

In Figure 3 it can be seen how, once the upper portion 14 has been opened and blocked with appropriate blocking means in a position which generally forms an acute angle between the corresponding side edges of the two portions 12 and 14, the casing 20, fixed at the bottom to an interior of the lower portion 12, is coupled at the top to an interior of the upper portion 14, in various coupling points 22 provided for this purpose.

The bag 18 comprises rigid reinforcing elements 24, internal or external to the casing 20.

Moreover, straps 26 are provided externally to the casing 20, which are placed under tension with buckles 28. The straps 26 are disposed in a vertical direction, from an upper end to a lower end of the casing 20.

This is above all useful in the event of the casing 20 being only partly filled. In fact, in this case the upper portion 14 of the storage box 10 does not reach a position of maximum aperture wherein the blocking means are provided, so that the upper portion 14 is blocked using the straps 26 and the buckles 28, the casing 20 being connected at the bottom to the lower portion 12 of the storage box 10 and at the top to the upper portion 14 of the storage box 10.

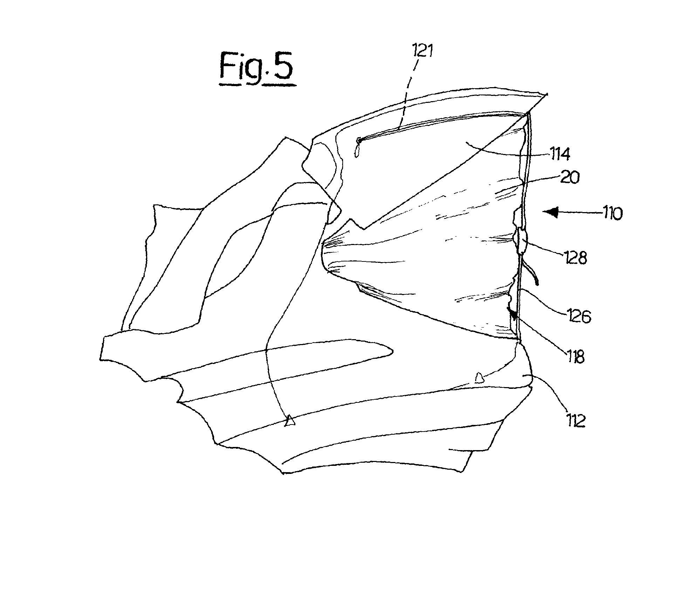

Figures 4 and 5 show another possible practical embodiment of an extensible storage box 110, wherein the same and/or equivalent components to those shown in the figures 1, 2 and 3 have the same reference numbers increased by 100.

The upper portion 114 in the example is hinged to the lower portion on one side. As can be seen in figure 4, disposed inside the upper portion 14 is a flexible bag 118, folded over itself and fixed to the upper portion 114.

The bag 118 includes a casing 120 in a flexible and weather-resistant material, for example a waterproof fabric. The casing 120 can be opened via a zip fastener 121 or other closing means.

In figure 5 it can be seen how, once the upper portion 114 has been opened and blocked with suitable blocking means, the casing 120, fixed at the top to an interior of the upper portion 114, is coupled at the bottom to an interior of the lower portion 112, in various coupling points 122 provided for this purpose.

The bag 118 comprises rigid reinforcing elements 124, inside or outside the casing 120.

Moreover, straps 126 are provided externally to the casing 120, which are placed under tension with buckles 128. The straps 126 are disposed in a vertical direction, from an upper end to a lower end of the casing 120.

From the description provided, the characteristics of an extensible storage box for a two-wheeled vehicle according to the present invention are apparent, just as the relative advantages are apparent, which include:
- versatile use, that is the intrinsic possibility to adapt to the different volumetric requirements of the load;
- simple and reliable use;
- protection of the item transported;
- moderate costs.
Finally, it is apparent that the extensible storage box for a two-wheeled vehicle thus conceived is susceptible to numerous modifications and variants, all coming within the scope of the invention; moreover, all the details may be replaced by technically equivalent elements. In practice, the materials used, the shapes and dimensions may be any according to technical requirements.

The scope of protection of the invention is therefore delimited by the attached claims.

## Claims

1. Extensible storage box (10, 110) for a two-wheeled vehicle, of the type comprising a lower portion (12, 112) and an upper portion (14, 114), the upper portion (14, 114) which can be closed over the lower portion (12, 112) to provide a loading compartment (16, 116) of a certain volume, **characterized in that** it includes a flexible bag (18, 118) connected internally in said loading compartment (16, 116) to at least one of said portions (12, 14, 112, 114) of said storage box (10, 110).

2. Extensible storage box (10) as claimed in claim 1, **characterized in that** said flexible bag (18) is fixed internally to said lower portion (12).

3. Extensible storage box (10, 110) as claimed in claim 1, **characterized in that** said bag (18, 118) includes a casing (20, 120) in a flexible and weather-resistant material.

4. Extensible storage box (10, 110) as claimed in claim 3, **characterized in that** said casing (20, 120) can be opened by closing means (21. 121).

5. Extensible storage box (10, 110) as claimed in claim 4, **characterized in that** said closing means are zip fasteners (21, 121).

6. Extensible storage box (10, 110) as claimed in claim 1, **characterized in that** said upper portion (14, 114) is opened and blocked with appropriate blocking means in a position which generally forms an acute angle between the corresponding side edges of said two portions (12, 14, 112, 114), said upper portion (14, 114) being hinged to said lower portion (12, 112) on one side.

7. Extensible storage box (10) as claimed in claim 1, **characterized in that** said casing (20) is coupled at the top to an interior of said upper portion (14), in various coupling points (22).

8. Extensible storage box (10, 110) as claimed in claim 1, **characterized in that** said bag (18, 118) comprises rigid reinforcing elements (24, 124).

9. Extensible storage box (10, 110) as claimed in claim 8, **characterized in that** said rigid reinforcing elements (24, 124) are inside or outside said casing (20, 120).

10. Extensible storage box (10, 110) as claimed in claim 3, **characterized in that** straps (26, 126) are provided externally to said casing (20, 120) which are placed under tension with buckles (28, 128).

11. Extensible storage box (10, 110) as claimed in claim 10, **characterized in that** said straps (26, 126) are disposed in a vertical direction, from an upper end to a lower end of said casing (20, 120).

12. Extensible storage box (110) as claimed in claim 1, **characterized in that** said flexible bag (118) is fixed internally to said upper portion (114).

13. Extensible storage box (110) as claimed in claim 3, **characterized in that** said casing (120) is coupled at the bottom to an interior of said lower portion (112), in various coupling points (122).
